# EUROPEAN PATENT SPECIFICATION

(11) **EP 4 370 880 B1**
(45) Date of publication and mention of the grant of the patent: **01.04.2026**
(21) Application number: 22743735.7
(22) Date of filing: 07.07.2022
(51) Int. Cl.: G01F 15/063, G01F 1/66, H01Q 1/22, H01Q 7/00, H04B 5/26, G01D 4/00

(54) **A FLOW METER UNIT**
DURCHFLUSSMESSEREINHEIT
UNITÉ DÉBITMÈTRE

(30) Priority: 16.07.2021 DK PA202100766
(43) Date of publication of application: 22.05.2024
(73) Proprietor: Kamstrup A/S, 8660 Skanderborg (DK)
(72) Inventor: HOLMEGAARD, Lotte, 8660 Skanderborg (DK); LAURSEN, Peter Schmidt, 8660 Skanderborg (DK); SØRENSEN, Jens Lykke, 8660 Skanderborg (DK)
(74) Representative: Plougmann Vingtoft a/s
(86) International application number: PCT/DK2022/050156
(87) International publication number: WO 2023/284925

(56) References cited:
- EP-A1- 3 106 842
- US-A1- 2010 057 296
- US-A1- 2014 167 978
- US-A1- 2016 305 807
- US-A1- 2018 139 598
- US-A1- 2019 113 376

## Description

### Field of the Invention

The invention relates to the field of flow meters used for determining the flow rate or flow volume of a fluid passing through the flow meter. The invention relates in particular to ultrasonic flow meters.

### Background of the Invention

Apart from measuring the flow rate or the aggregated volume of a fluid over time a flow meter has the full electronics available for measuring further parameters of a fluid. Information about further parameters such as pressure is in many applications an advantage because the process control and monitoring of the process is improved. However, the addition of an extra sensor to a mass produced flow meter is, at the end user side, not always possible because many flow meters are manufactured as hermetic entities in order to prevent the ingress of moisture to the control electronics. But if the sensor can be integrated by the manufacturer already during manufacturing the advantage of using the already present metering electronics for a further sensor can be harvested. From EP 3367074 A1 by the Applicant an ultrasonic flow meter is known which has a pressure sensor integrated in the flow meter. The pressure sensor is controlled by the metering electronics already used for sensing the flow rate of a fluid. However, special measures have to be taken to avoid the ingress of fluid from the flow tube into the electronics. Thus, apart from sealing O-rings, an additional drainage channel has been introduced in order to transport away leaked fluid before it reaches the electronics. If such drainage channel gets clogged the electronics are at peril. US 2019/113376 A1 discloses a water meter platform including a housing component providing a flow tube, a sealable main compartment adapted to house a meter unit for measuring a flow of a fluid flowing through the flow tube and a flow channel interface in fluid communication with the flow tube adapted for mounting additional functional units, such as a valve unit and/or a sensor unit.

### Objective of the Invention

An objective of the invention is to provide a flow meter unit having an extra fluid sensor without risking an increased leakage of fluid into the electronic metering circuitry of the flow meter unit.

It is a further object of the invention to provide a versatile flow meter unit which in an easy way during manufacturing can be customized for measuring a specific further parameter of a fluid.

### Description of the Invention

The objective is met with a flow meter unit according to claim 1. More specifically a flow meter unit is comprising a flow tube, a housing and a housing compartment, the housing compartment comprising transmitter and receiver means which includes a long-range antenna for wireless long-range communication. The housing compartment also comprises an electronic metering circuitry which circuitry is intended for determining a fluid flow rate and/or a fluid flow volume through the flow tube by means of a first sensor arrangement. The metering circuitry is via a further transmitter and receiver means in wireless communication with a second sensor arrangement which is in contact with the fluid and is placed outside the housing compartment. The first sensor arrangement is an ultrasonic sensor arrangement that measures transit times of ultrasonic signals reflected on reflecting surfaces and comprises two piezoelectric transducers placed on a bottom wall of the housing compartment, said bottom wall forming part of the flow tube and the piezoelectric transducers being connected to the electronic metering circuitry and being powered by a self-contained power supply. A short-range antenna of the further transmitter and receiver means is arranged inside the housing compartment and the short-range antenna is placed distanced from the long-range antenna and positioned at a height which is in-between said long-range antenna and a bottom wall of the compartment.

The short-range antenna of the flow meter unit is thus placed below the long-range antenna and in a height (i.e. level) on or above a bottom wall. Hereby a further wireless communication direction of a smart flow meter is obtained because the short-range antenna is placed in a lower part of the flow meter housing, such as in the lowest 1/3, and focusing its communication power towards the second sensor arrangement which is placed in contact with the fluid. The transmitter and receiver means including the long-range antenna is used for long-range communication of measured flow data, such as in the range of hundreds or thousands of meters. The long-range antenna is placed in the upper part of the housing compartment and designed for a high gain in a direction away from the flow meter. In contrast the present invention describes a design where a short-range antenna is communicating inside the flow meter unit through housing, flow tube walls and/or through fluid.

By placing the sensor outside the housing compartment, i.e. at a distance from the housing with a housing wall in between the compartment and the second sensor arrangement, the risk of water ingress into the compartment caused by the addition of a further sensor is reduced to zero. Though there will still be diffusion of fluid into the compartment from other sources but the additional sensor will not add to the amount of diffused fluid. Any risks of leakage are moved away from the housing compartment to a place where minor leaks are no problem. The second sensor arrangement, such as a pressure sensor, is - via the further transmitter and receiver means - in wireless communication with the electronic metering electronics inside the compartment of the housing. The second sensor arrangement and the electronic metering circuitry are galvanically separated and materially separated by at least one wall. The galvanic separation has the effect that in case of a failure of the sensor, e.g. caused by a short circuit in its circuitry, this error will not impact the metering electronics which could otherwise be the case in a design with galvanic connection between the two electronics groups.

The invention has the further advantage that the flow meter unit can be customized to the sensor needs of the end user at a late stage in the manufacturing process. Thus, the housing and metering electronics including the first sensor arrangement can be manufactured in large numbers without early diversification and complication of the flow meter. Instead at a late point in the manufacturing process the specific sensor type ordered by the customer is placed in the flow tube hereby finally identifying the type of flow meter unit, e.g. a flow meter unit with a temperature sensor or with a chlorine sensor. At this point in time the testing of the main body of the flow meter unit is already finished and end testing is now reduced to the sensor - flow meter interface.

A further advantage of the invention is the easy access to replacement of the sensor to a new type of sensor or a new generation. There is no need for opening the flow meter unit which is often also hermetically sealed and not intended for service. In some cases the sensor may need a recalibration and also in this situation it can readily be removed and installed again. Replacement of sensors is particularly relevant in cases where the life span of the sensor is short compared to the life span of the flow meter.

The invention also enables retro-fitting a sensor to the flow meter after a period of operation of the meter. If the end user sometime after installation desires to have for example a pressure sensor installed this can relatively easy be realized. After placing the sensor on the flow meter unit the new sensor and the electronic metering circuitry in the housing compartment of the flow meter will make a wireless data hand shake and operation can commence. Retro-fit or replacement of a sensor is enabled by having a bore in the flow tube giving the sensor access to the fluid. From the factory the bore is initially closed but if retro-fit is later required a plug must be removed and the sensor inserted into the bore.

The wireless data communication between the second sensor arrangement and the electronic metering circuitry is performed through the short-range antenna of the further transmitter and receiver means using radio frequency identification RFID and/or near field communication (NFC). Also Bluetooth communication protocol such as Bluetooth Low Energy (BLE) can be used. These protocols come in handy in this design where a point-to-point communication at a short distance is required. In most Bluetooth protocols the sensor would need its own power supply for communicating with the flow meter unit.

The short-range antenna of the further transmitter and receiver means is positioned in a section of the compartment that houses the bottom wall and which section is distal to the position of the long-range antenna. By placing the short-range antenna as close as possible to the bottom or to a wall of the compartment an improved wireless communication is enabled. Placing the antenna of the further transmitter and receiver means at the top of the compartment, close to the lid and the long-range antenna, will impair the short-range communication.

Advantageously, the short-range antenna of the further transmitter and receiver means is placed against a wall of the compartment, preferably adhered to the wall with glue or by a mechanical snap-in arrangement. Close contact between the wall and the short-range antenna or between the wall and a substrate with the short-range antenna improves signal transmission.

The flow meter unit advantageously implements the second sensor arrangement as a passive electronic circuitry which includes a short-range sensor antenna and where an electrical energy for activating the passive circuitry to generate a measurement of a physical parameter of the fluid is supplied from the short-range antenna of the further transmitter and receiver means placed in the housing compartment. The second sensor arrangement then generates a subsequent data transfer of the measured physical parameter to the short-range antenna of the further transmitter and receiver in the housing compartment. A passive electronic circuitry in the second sensor arrangement obviates the need for a battery in the sensor because the electrical energy for the sensor is provided by the electromagnetic field generated by the transmitter and receiver means in the housing. Advantageously, a capacitor can be implemented in the passive electronic circuitry and used for storing energy to provide ride-throughs or assist the flow meter battery. Passive RFID technology is described in International Standards Organization documents ISO 15693 and ISO 14443.

In an embodiment of the flow meter unit the second sensor arrangement is placed in a bore in a wall of the flow tube, preferably with an inner part of the second sensor arrangement fully or partly immersed into the fluid and an outer part placed outside the flow tube, said outer part containing the transmitter and receiver means including the short-range antenna, and the inner part containing a fluid channel. The sensor can be shaped like a bolt, where the stem carries sensing electrodes or a fluid channel and is sunk into the fluid and the outer part contains the transmitter and receiver means and memory. With the stem and the bore wall being threaded a particularly easy placement and replacement of the sensor is obtained.

Preferably the short-range sensor antenna of the second sensor arrangement is extended in a direction towards a position where the distance from the short-range sensor antenna to the short-range antenna of the further transmitter and receiver means arranged inside the housing compartment enables an optimized inductive coupling between the two antennas. Such a position is where the distance corresponds to a the thickness of a wall, or even a thickness of a wall portion which has been worked to become thinner than a neighboring portion of the wall. The extension of the antenna, such as a prolongation of a coil antenna mounted on a substrate, makes it possible to direct the antenna to a spot on the housing where the signal coupling between the two short-range antennas is high. In some embodiments the inductive coupling between two separate coil antennas can be increased by having two or more layers of coils for each antenna.

Preferably the short-range antenna of the further transmitter and receiver means in the housing compartment is embodied as a coil and placed with a narrow distance to the short-range second sensor antenna, such as a distance where a wireless signal received from the second sensor arrangement has maximum or near maximum amplitude. The coil is preferably without a core and made as a planar coil on a substrate such as on a printed circuit board. The distance between the second sensor arrangement, or more precisely between the short-range antenna of its transmitter and receiver means and the short-range antenna inside the housing compartment, is smaller than the length of an inlet part or an outlet part of the flow tube. Alternatively the distance is equal to or smaller than the diameter of the flow tube or the distance corresponds to a multiple of the wall thickness of the housing, such as 0,5 to 2 times the wall thickness of the housing. The distance can also be expressed in absolute numbers such that the second sensor arrangement or a part of it is placed in an opening in the flow tube with a distance between 0,1 centimeter and 10 centimeters between the short-range sensor antenna of the transmitter and receiver means and the short-range antenna inside the housing compartment, more preferred between 1 centimeter and 5 centimeters, and wherein the compartment of the housing is materially separated from the opening or bore by a wall in the flow tube. In some variants of the invention an inner wall surface of the housing compartment is made thinner than neighboring parts of the wall because the antenna means are placed on the thinner section.

Although the invention can be embodied with wireless communication through air the flow meter unit has in a particular embodiment of the invention wireless communication between the short-range antenna of the second sensor arrangement and the short-range antenna of the further transmitter and receiver means partly through the fluid, such as water. As the distance between the receiving and sending antennas is kept small the electromagnetic waves are able to penetrate the water with an acceptable degree of dampening of the signal. In one variant the signal will pass a housing wall and then two to three millimeters of fluid. In another variant the signal will pass through a wall, then pass fluid in a distance approximately corresponding to the diameter of the flow tube. The housing of the inventive flow meter unit is preferably manufactured in polyphenylene sulfide (PPS) material and it has been found that the attenuation of an NFC wireless signal through a fluid such as water and through walls consisting of PPS is negligible when the distance between the antenna of the housing compartment and of the second sensor arrangement is kept small.

In an embodiment of the invention the second sensor arrangement is inserted in longitudinal direction into an inlet section or outlet section of the flow tube, the second sensor arrangement being essentially cylindrical and having a longitudinal throughgoing opening in the middle for enabling the flow of fluid. The transmitter and receiver means of the sensor are placed in a space in between an inner cylindrical wall and an outer cylindrical wall of the sensor arrangement. This solution thus avoids making any bores into the flow tube as the fluid opening for sensing e.g. the fluid pressure is made in the inner wall of the throughgoing opening of the cylinder. The transmitter and receiver means including the short-range antenna are placed on a flexible substrate and bent into a full or semi cylindrical shape and the second sensor arrangement can be fixated to the flow tube with a thread in the outer cylinder wall mating a thread on the inner side of the inlet or outlet opening of the flow tube.

Advantageously, the second sensor arrangement is contained in a sensor box which comprises a measuring stem inserted fully or partly into a bore of the flow tube and contacting the fluid, the sensor box further comprising a planar short-range antenna which is arranged in parallel with a planar antenna of the further transmitter and receiver means placed inside the housing compartment. With the word "planar" is understood a form factor of the antenna or the substrate of the antenna where the length is considerably longer than the height of the antenna. Also the sensor box is fully or partly planar and the planar section can have a square, rectangular or a circular shape. The planar portion of the sensor box preferably comprises the planar coil functioning as an antenna. Thus an essentially flat portion at a wall of the housing compartment is used for placing a planar antenna. In this way a particularly low distance side-by-side arrangement of the two short-range antennas is obtained whereby an optimized energy and data transfer is achieved. The sensor box is made as flat as possible in order to avoid enlarging the constructional height of the flow meter unit.

The second sensor arrangement can in one embodiment be placed on an outside wall of the housing of the flow meter unit. The outside wall can be one of the vertical sides of the housing or it can be the bottom. In a special variant the bottom is flat with a circumferential shape and the bottom incorporates the flow tube.

The flow meter unit advantageously has several communication channels. In a situation where the protocol and technology of these channels match, the further transmitter and receiver means in the housing compartment is advantageously configured for near field communication with the second sensor arrangement and also configured for communication with a communication device external to the flow meter unit, such as a smart phone, such as on a time sharing basis. Hereby duplication of hardware is avoided as the same antenna and transceiver means can be used. Thus, in the housing compartment of the flow meter unit, the transmitter and receiver means including a short-range antenna is designed for either simultaneous NFC wireless communication with the second sensor arrangement and an external device, or designed for sequential communication with the sensor and the external device. Electronic readers such as smartphones are equipped with short-range antennas and in order make communication between the flow meter unit and the smartphone possible an even further short-range antenna is placed in the compartment. The antenna is placed in a position enabling the electronic metering circuitry and the short-range antenna to communicate via near field communication with a smartphone, such as placed in a position on a lid or in a position between 0,1 - 3 centimeters below a lid. This means that in one embodiment the housing of the flow meter unit holds three transmitter and receiver means: a long-range transmitter and receiver means including a long-range antenna, a short-range transmitter and receiver means including a short-range antenna for communication with a local sensor, and a short-range transmitter and receiver means including a short-range antenna for communication with an external unit, such as a smartphone.

In those types of ultrasonic flow meter units that use the principle of reflectivity of the ultrasonic signal a reflector slay with reflecting surfaces is often used. In accordance with the invention the second sensor arrangement can be placed in the reflector arrangement (the slay) in between two reflecting surfaces but without interfering with the signal path, said reflector arrangement with sensor arrangement being inserted into and fixed in longitudinal direction of the flow tube. The first sensor arrangement measures in a known manner transit times of the ultrasonic waves reflecting on the reflecting surfaces. This design has the advantage that the second sensor arrangement is mounted on a reflector arrangement which is already present in an ultrasonic flow meter unit, and no further holes for sensors in the unit have to be made. In the reflector slay arrangement there is space in between the two reflecting surfaces where the sensor can be placed essentially without disturbing the fluid flow through the flow tube and the reflector arrangement.

In a particularly advantageous design the second sensor arrangement is placed as a fully or partly cylindrical part of the reflector slay arrangement, said cylindrical part extending longitudinally in between the reflector surfaces and facing a wall of the housing. Thus, instead of placing the second sensor arrangement on the bottom of the reflector slay arrangement the sensor is placed on top of it, forming part of the flow channel of the reflector slay arrangement.

The flow meter unit is powered solely with electricity from a self-contained power supply placed inside the housing compartment and the electrical energy for energizing the second sensor arrangement is delivered by the self-contained power supply via the short-range antenna of the transmitter and receiver means arranged in the compartment. A lithium-thionyl-chloride battery can be used as a self-contained power supply and will supply power to the flow meter unit during its full lifetime. The second sensor arrangement can be embodied as one or more of the following: a pressure sensing device, a temperature sensing device, a chlorine sensing device, a redox potential sensing device, an accelerometer, a microphone or a hydrophone, an image recording device, a lab on a chip. In one variant two or more of these sensor types are integrated into one and the same sensor arrangement i.e. sharing one sensor housing, memory, controlling and transmitter and receiver means but having two sensors, e.g. one for fluid pressure sensing and another for fluid temperature sensing.

An example not encompassed by the wording of the claims also relates to a method for controlling wireless data communication in a flow meter unit having a first and a second sensor arrangement. The method is used in a flow meter unit which comprises a housing with electronic metering circuitry where the circuitry is determining a fluid flow rate and/or a fluid flow volume through a flow tube by means of the first sensor arrangement. The second sensor arrangement is placed outside a housing compartment and is in mechanical contact with the flow tube. The second sensor arrangement is in wireless communication with the electronic metering circuitry via transmitter and receiver means placed in the compartment and via transmitter and receiver means placed in the second sensor arrangement. The frequency of activation of the second sensor arrangement by the electronic metering circuitry is controlled by the metering circuitry and is reduced if the metering circuitry detects a drop in the power or voltage of a self-contained power supply in the flow meter.

The exemplary method described above is useful in battery powered applications. If flow meter units are supplied with electrical power from the mains there is in principle no reason to place any constraints on the electrical current consumption in control and sensing. However, when energizing the flow meter unit from a self-contained power supply with no charging possibilities and an expected lifetime of up to 15 years a proper strategy for the usage of electrical current must be used. An advantageous strategy for power saving is to reduce the number of communication exchanges - pollings - of the second sensor arrangement as a function of the battery voltage or battery power. Each polling costs energy because energy has to be transmitted to the sensor via the transmitter and receiver means, so reducing the polling frequency with for example 50% if the voltage has dropped 10% is advantageous. In this way an extension of the operational lifetime of the flow meter unit is ensured. In non-time critical applications with low dynamics the polling frequency can be lowered even further, say to 10%. For example polling once each hour or each day.

In order to avoid cross talk between different communication channels in the flow meter unit the energization of and data communication with the second sensor arrangement is stopped while the first sensor arrangement is measuring flow rate or flow volume or while the electronic metering circuitry is activating transmitter and receiver means for wireless long-range communication by the flow meter unit such as transmitter and receiver means using wireless M-Bus, Lora-wan, cellular communication (Nb-loT) or Bluetooth technologies. After being stopped the energization of and data communication with the second sensor arrangement will be resumed. Hereby first communication priority is given to the flow measurement and to the wireless reporting of the flow values that have been measured.

In a situation where a battery level of a flow meter unit is too low and close to bringing the flow meter unit operation to a halt, the second sensor arrangement preferably comprises a memory which is configured for storing last gasp information from the flow meter. Such information will be an aid to the service technician.

Other embodiments are described in the following text.

In another embodiment of a flow meter unit the data communication between the second sensor arrangement and the electronic metering circuitry is done by means of RFID, NFC or Bluetooth communication protocols.

In another embodiment of a flow meter unit the second sensor arrangement comprises a passive electronic circuitry including an antenna of the transmitter and receiver means and where electrical energy for activating said passive circuitry to generate a measurement of a physical parameter of the fluid and to generate a subsequent data transfer of the measured physical parameter is supplied from an antenna of the transmitter and receiver means placed in the housing compartment.

In yet another embodiment of a flow meter unit the unit is powered solely with electricity from a self-contained power supply placed inside the housing compartment and the electrical energy for energizing the second sensor arrangement is delivered by said self-contained power supply via the transmitter and receiver means.

In an embodiment of a flow meter unit said antenna of the transmitter and receiver means is embodied as a coil and placed inside the housing compartment with a distance close to the second sensor arrangement, such as a distance where a wireless data signal received from the second sensor arrangement has maximum or near maximum amplitude.

In another embodiment a flow meter unit the second sensor arrangement is placed in a bore in the flow tube with a distance (d) between 0,1 centimeter and 10 centimeters between the antenna in the transmitter and receiver means and the antenna inside the housing compartment, more preferred between 1 centimeter and 5 centimeters, and wherein the compartment of the housing is materially separated from the bore by a wall in the flow tube.

In an embodiment of a flow meter unit the second sensor arrangement is placed in a bore in a wall of the flow tube, preferably with an inner part of the sensor arrangement fully or partly immersed into the fluid and an outer part placed outside the flow tube, said outer part containing the transmitter and receiver means and the inner part containing a fluid channel.

An embodiment teaches a flow meter unit wherein the wireless data communication signal between the second sensor arrangement and the electronic metering circuitry is partly transmitted through the fluid, such as through water.

In an embodiment of a flowmeter unit the second sensor arrangement is inserted in longitudinal direction into the inlet opening or outlet opening of the flow tube, the second sensor arrangement being essentially cylindrical and having a longitudinal throughgoing opening for enabling the flow of fluid, and the transmitter and receiver means being placed in a space in between an inner cylindrical wall and an outer cylindrical wall of the second sensor arrangement.

In an even further embodiment of a flow meter unit the second sensor arrangement is contained in a sensor box, especially a planar sensor box, said planar sensor box comprising a measuring stem inserted fully or partly into a bore of the flow tube and contacting the fluid and further comprising a planar antenna, the planar sensor box being arranged in parallel with a planar antenna of the transmitter and receiver means inside the housing compartment.

In an embodiment a flow meter unit the transmitter and receiver means in the housing is configured for near field communication with the second sensor arrangement and also configured for communication with a communication device external to the flow meter unit, such as a smart phone, such as on a time sharing basis.

In an embodiment of a flow meter unit the second sensor arrangement is placed in an ultrasonic reflector slay arrangement in between two reflecting surfaces without disturbing the ultrasonic signals, said reflector arrangement being fixated and extending in longitudinal direction of the flow tube.

### Description of the Drawings

In the following a number of embodiments of the invention will be described with reference to the following Figures:
Figure 1 shows a flow meter unit according to a first embodiment according to the invention
Figure 2 is a cut away view of the flow meter unit of Figure 1 and showing the first, second, third and fourth embodiment of the invention
Figure 3 shows a flow meter unit according to a fifth embodiment of the invention
Figure 4 shows a cut away view of the flow meter unit of Figure 3 with the fifth embodiment of the invention
Figure 5 is a bottom view of the fifth embodiment of the invention
Figure 6 is a further bottom view of the fifth embodiment of the invention
Figure 7 shows a cut away view of the flow meter unit of Figure 3 with further placements of short-range antennas

### Detailed description of the invention

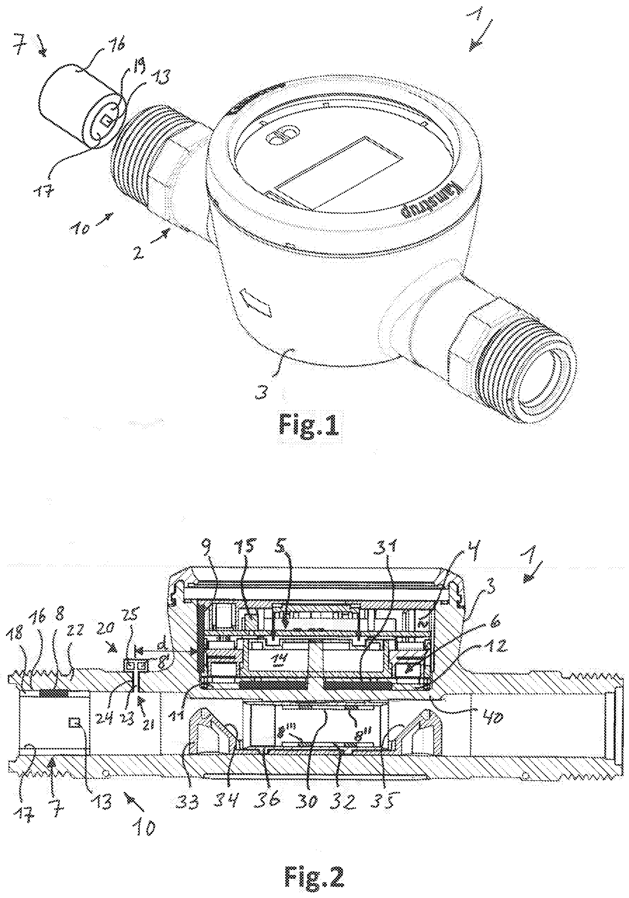

Figures 1 and 2 show a flow meter unit 1 in a first, second, third and fourth embodiment of the invention. The flow meter unit is an ultrasonic flow meter based on transient time measurement and reflectivity principle. The flow meter unit has a polymer housing 3 and a flow tube 2, the flow tube and housing being integrated in a casting as a monolithic structure. The flow meter unit has a housing compartment 4 in which control electronics such as microprocessors, memory circuits, signal generating circuit and ultrasonic transducers are placed, all collected under the terminus electronic metering circuitry 5. The compartment also comprises a transmitter and receiver means including an antenna for performing wireless communication. The housing compartment is a hermetically sealed space. The two ultrasonic transducers are piezo electric transducers shown with position numbers 11 and 12 and they are connected to ultrasonic signal generators and receivers (not shown), together forming the first sensor arrangement 6.

In the first embodiment the second sensor arrangement is a pressure sensor. In an outlet section 10 of the flow tube a second sensor arrangement 7 is placed. The sensor arrangement 7 is essentially cylindrical with a throughgoing opening 19 in the middle to allow the fluid to flow through the sensor. The sensor is inserted into the outlet section 10 in a press fitting manner or by means of a thread and has an outer cylindrical wall 16 and an inner cylindrical wall 17. Between the two walls a space 18 is provided in which a substrate with a passive electronic circuitry is placed. The passive circuitry comprises transmitter and receiver means 8 including a short-range antenna for communicating via short-range antenna 9 and transmitter and receiver means placed in the housing compartment 4. In the further transmitter and receiver means and in the transmitter and receiver means of the second sensor arrangement planar coils are arranged which function as antennas. A self-contained power supply 14, i.e. a battery, is the sole energy supply of the flow meter unit and thus supplies power to the electronic metering circuitry 5 and the transmitter and receiver means. When the short-range antenna 9 of the transmitter and receiver means is energized electromagnetic waves travel to the antenna in the second sensor arrangement 7 and energize the passive electronic circuit. The controller in the sensor awakens and initiates a measurement of the fluid pressure in the flow tube 2. The pressure is measured through an opening 13 in the surface of the inner cylindrical wall 17. The cylinder of sensor 7 is preferably made in stainless steel but can also be manufactured in polymeric material. Once the pressure has been measured the transmitter part of the transmitter and receiver means 8 sends a data signal to the receiver short-range antenna 9 and the controller in the electronic metering circuitry 5 then handles this data, e.g. passes on the information via a radio frequency circuit with a long-range antenna 15, which transfers the data to a remote Head End System. The housing compartment 4 thus contains transmitter and receiver means for long-range communication, including a long-range antenna 15, and a further transmitter and receiver means, including a short-range antenna 9.

By example, long-range communication frequencies can be at 868 MHz and the long-range antenna be shaped as a longitudinal metallic strip. The wireless communication between sensor 7 and the further transmitter and receiving means is done according to the NFC protocol and using a frequency of 13,56 MHz. Other wireless point to point communication technologies can be used.

Staying with Figure 2 a second embodiment of the invention is shown. A bolt shaped second sensor arrangement 20 is inserted into a bore 21 of the wall 22 of the flow meter unit. The sensor 20 is a pH sensor and has a stem 24 with a fluid channel 23 for accessing the fluid. In the upper part of the sensor placed outside of the flow tube the transmitter and receiver means 8' and control electronics 25 are placed. The sensor 20 is placed at a distance d from the antenna 9 of the further transmitter and receiver means in the compartment. Common to all embodiments of the invention is that near field communication is very localized because of the limited range of the communication signal. The distance d is preferably in the range of 0,1 to 10 centimeters, more preferred between 1 centimeter and 5 centimeters.

A third embodiment of the invention is shown with position 33 and 30 in Figure 2. 33 is a reflector arrangement and well known in the art. The arrangement is a slay that is inserted into the flow tube during manufacturing and the slay has two reflecting surfaces 34 and 35. These surfaces are placed directly below the piezoelectric transducers 11 and 12 and used in the ultrasonic transit time reflectivity measurement. According to the invention the second sensor arrangement 30 is placed as a part of the reflector arrangement, namely as part of a reflector tube 36 in between the two reflector surfaces 34 and 35 but without disturbing the ultrasonic signal path. Also here the second sensor arrangement 30 comprises passive electronics and transmitter and receiver means 8" including a short-range antenna and is in direct communication with short-range antenna 31 of the further transmitter and receiver means, said antenna 31 placed on an inner bottom surface of the compartment 4. The antenna 31 is a coil antenna placed on a flat substrate resting against the wall, i.e. the inner bottom surface. By placing the short-range antenna of the compartment and the short-range antenna of the sensor in parallel, facing each other, a good quality signal transfer is obtained. The wireless NFC communication happens through wall 40 and through a thin amount of fluid.

A fourth embodiment of the invention is also shown in Figure 2 and has the second sensor arrangement 32 placed on a bottom part of the reflector arrangement 33 and in between the two reflector surfaces 34 and 35, again without disturbing the ultrasonic signal path. In this embodiment the sensor is a chlorine sensor. Transmitter and receiver means 8‴ are part of the sensor as well as controlling electronics, short-range antenna and memory. Sensor 32 is like sensor 30 but has a longer communication distance through the fluid to short-range antenna 31.

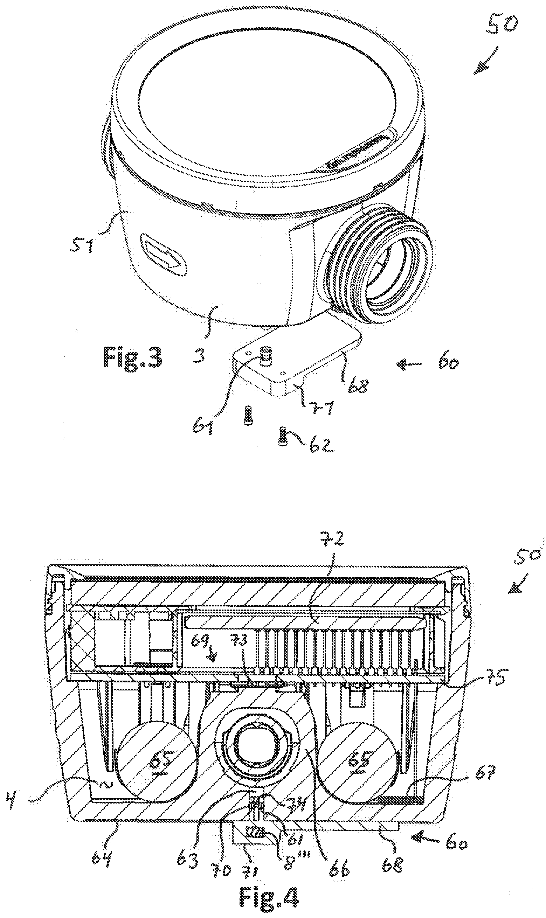

A fifth embodiment of the inventive flow meter unit is shown in the Figures 3, 4, 5 and 6. Flow meter unit 50 uses the same measurement principle as flow meter unit 1. In Figure 3 the second sensor arrangement is embodied as a planar sensor box 60 with the transmitter and receiver means placed on a flat substrate inside the box which box is preferably made in polymeric material. By example the planar sensor box is 3 centimeters times 2 centimeters. It has a thicker outer part 71 and a thinner part 68, and the coil antenna is placed in the thinner part and the control, memory and measurement electronics are placed in the outer part 71. A measurement stem 61 is placed vertically on the planar surface of sensor box 60 facing the bottom of the flow meter unit 50 and the measuring stem 61 has a fluid channel 74 enabling contact with the fluid in the flow tube. Figure 4, which is a cut away view of Figure 3, shows in more detail how the stem 61 with fluid channel 74 is inserted into bore 63 of flow meter unit 50. An O-ring 70 seals against leakage of fluid. Even if there is leakage only little harm is done, because the sensor is placed at the bottom the flow meter unit 50 and any leaking fluid will simply drop to the floor. Two power supplies 65 - batteries - supply the flow meter with energy including electronic metering circuitry 69 and passive electronics in the planar sensor box 60. The first sensor arrangement is placed on the printed circuit board 75 on which display 72 is also mounted. Due to the cut away view in Figure 4 the piezoelectric transducers are not visible but they are placed on a wall part of the flow tube shown as position 73. The housing compartment 4 also has transmitter and receiver means for NFC communication with the second sensor arrangement, i.e. sensor box 60. Ultrasonic signal generating electronics are placed on the printed circuit board 75 and planar short-range antenna 67 are placed at the bottom of the compartment 4. Electrical connection from printed circuit board 75 to short range antenna 67 is established by wires (not shown). By elongating the planar sensor box 60 and its short-range antenna to the area where the antenna 67 is placed and is overlapping with the antenna of the second sensor arrangement a robust wireless communication is possible through only the width of one housing wall. Such wall can be made thinner in this section. In this embodiment the wireless signal does not have to travel through the fluid. The planar sensor box 60 is mechanically fixated to the housing by means of screws 62. Fixation could also be made by snap fitting means or by gluing. The surface of the planar sensor box that is facing the bottom of the flow meter 50 is flush and parallel with the bottom wall 64.

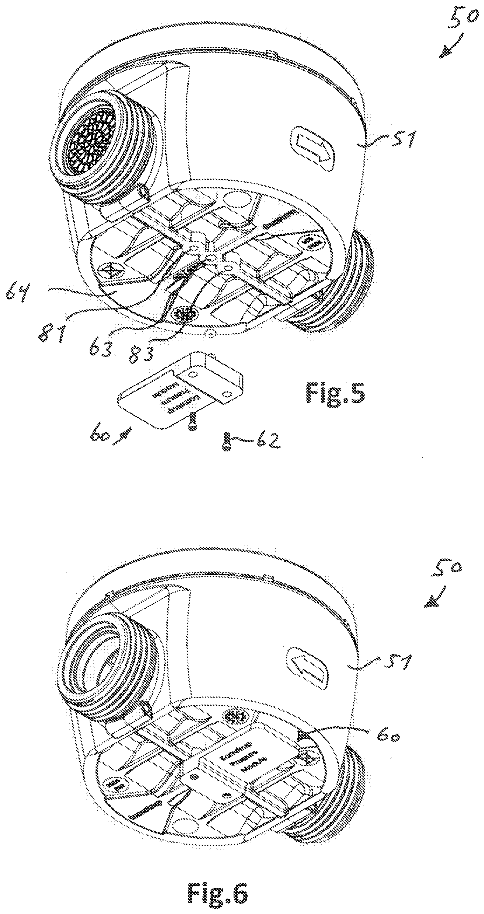

Figures 5 and 6 are bottom views of the fifth embodiment. Housing 51 has a bottom wall 64 where closed bottom holes 81 and 83 take up screws 62. Bore 63 is a fluid channel and is in direct communication with the fluid of the flow tube. In Figure 6 the flow meter unit is ready for use, the planar sensor box 60 fully mounted. In a variant (not shown) of the fifth embodiment the bottom wall 64 has a recess or opening where sensor 60 is placed or buried, thus being flush with the plane of the bottom.

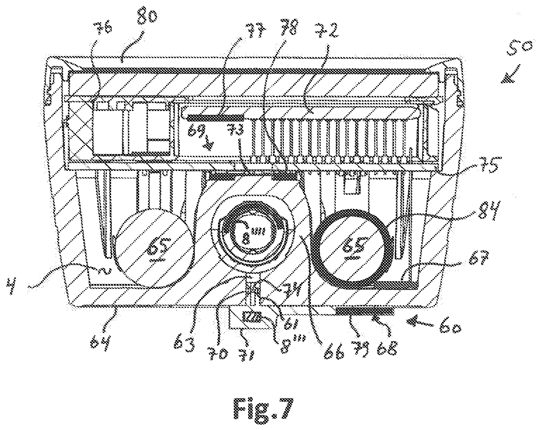

Common to all embodiments is that the short-range antenna of the further transmitter and receiver means in the housing compartment 4 is placed below the long-range antenna if seen in a direction from a top of the flow meter unit with lid 80 towards the bottom wall 64 of the compartment 4. The short-range antennas, e.g. pos. 31 of Figure 2, is placed at a height in-between long-range antenna 15 and bottom wall 40. Correspondingly, short-range antenna 67 in Figure 7 is placed distanced from top-placed long-range antenna 76 and placed in-between the bottom wall 64 and the height or level of the long-range antenna. The placement strategies of the two types of antenna actually diverge in opposite directions. However, in some situations where a near field communication signal from a second sensor arrangement is strong enough short-range antenna 67 could be placed elevated above the bottom wall 64, closer to the long-range antenna 76. Figure 7 shows further embodiments and here the short-range antenna 78 is placed at an elevated position of the bottom wall, namely on a part of the bottom that includes a wall part 73 of the flow tube 2. Short-range antenna 78 is in wireless communication with a curved short-range antenna of transmitter and receiver means 8ʺʺ placed in the reflector slay. Short-range antenna 78 is below long-range antenna 76 and resting on the bottom wall. Short-range antenna 78 is in-between the long-range antenna and the bottom wall. In a further embodiment of Figure 7 a flexible substrate with a short-range antenna 84 is wound around power supply 65, which is e.g. a C-cell battery. Antenna 84 can communicate wirelessly with antenna 79.

In Figure 7 an even further short-range antenna is introduced in the compartment 4. Short-range antenna 77 is placed close to the lid 80 in order to enable NFC communication with a smartphone when the phone is placed close to the flow meter unit, such as on top of the flow meter unit. In one embodiment the short-range antenna 77 is placed on a surface of the display 72, preferably on the lower surface distal to the display screen. In this embodiment the flow meter unit then incorporates a long-range antenna 76, a short-range antenna 78 communicating with a sensor and its short-range antenna via transmitter and receiver means 8ʺʺ, and a short-range antenna 77 for smartphone communication.

As battery power is a scarce resource in battery powered flow meters most flow meters have battery power constantly monitored, for example electronic metering circuitry 69 monitoring the voltage and current of power supply 65. Battery power for measuring the flow rate and flow volume has first priority and in case the battery power drops then less important operations can be stopped or reduced in activity. Thus, the communication activity with the second sensor arrangement can be lowered. It can be reduced in frequency of activation (less frequent polling) or the amount of data can be reduced or data telegrams can be shortened.

The second sensor arrangements disclosed in the inventive embodiments are measuring a physical parameter and wirelessly transmitting information about the physical parameter to the flow meter control electronics. The physical parameter can be one or more of fluid pressure, fluid temperature, turbidity, acceleration or vibration of flow tube, sound waves or vibration signals from the fluid or parameters describing chemical concentrations or characteristics of the fluid such as redox potential, pH value, fluid viscosity or chlorine content. In one variant the sensor arrangement is embodied as a lab on a chip including reservoirs of chemical agents used for analysis of samples of the fluid. Such analysis may include optical analysis means. In another variant the sensor arrangement is an optical camera fitted into the measuring stem 61 of sensor box 60 and streaming parts of the fluid flow or taking still pictures to be analyzed in a later step, e.g. analyzing the particle and bacteria content of a fluid by means of digital image analysis. In an even further variant the second sensor arrangement is embodied with a hydrophone immersed into the fluid and listening for fluid borne sound waves originating from leaks in pipes. The hydrophone is placed in measuring stem 61 of planar sensor box 60 and leak indicating signals in the frequency range of 500 Hz to 2 kHz are transferred wirelessly via the antenna to the receiver and transmitting means in the housing compartment.

In the embodiments described above the flow tube has been an integral part of the housing. Integral means that the housing and the flow tube has been cast in one step and has no joining seam other than at the lid interface when being assembled. In alternative embodiments of ultrasonic flow meters the flow tube is manufactured separately from the housing and the housing and the flow tube are then mated to become a flow meter unit. Such flow meters are for example heating meters where the flow tube often is in brass and the housing is a polymer. The invention described herein is equally applicable to such flow meter units.

Elements of the disclosed embodiments can be combined in various ways. The O-ring 70 of the fifth embodiment can for example be applied to the stem of sensor 20. Or the concept of the elongated thinner part 68 of planar sensor box 60 could be applied to the upper part of sensor 20 to extend the antenna towards the antenna in the housing compartment 4. Further, the communication technologies such as NFC, Bluetooth, cellular communication, wireless M-Bus and Lora-Wan, their protocols and frequencies can be used in all embodiments. In all embodiments transmitter and receiver means are electrically connected to short-range or long-range antennas and to electronic metering circuitry.

### List of position numbers

- 1: Flow meter unit
- 2: Flow tube
- 3: Housing
- 4: Housing compartment
- 5: Electronic metering circuitry
- 6: First sensor arrangement
- 7: Second sensor arrangement
- 8 8', 8", 8‴, 8ʺʺ: Transmitter and receiver means in the second sensor arrangement
- 9: Short-range antenna
- 10: Outlet section of the flow tube
- 11: Piezoelectric transducer
- 12: Piezoelectric transducer
- 13: Opening
- 14: Power supply
- 15: Long-range antenna
- 16: Outer cylindrical wall
- 17: Inner cylindrical wall
- 18: Space
- 19: Throughgoing opening
- 20: Bolt shaped second sensor arrangement
- 21: Bore
- 22: Wall
- 23: Fluid channel
- 24: Stem
- 25: Control electronics
- 30: Second sensor arrangement
- 31: Short-range antenna
- 32: Second sensor arrangement
- 33: Reflector slay arrangement
- 34: Reflecting surface
- 35: Reflecting surface
- 36: Reflector tube
- 40: Wall
- 50: Flow meter unit
- 51: Housing
- 60: Sensor box
- 61: Measuring stem
- 62: Screw
- 63: Bore
- 64: Bottom wall
- 65: Power supply
- 66: Wall
- 67: Short-range antenna
- 68: Thinner part of sensor
- 69: Electronic metering circuitry
- 70: O-ring
- 71: Outer part of sensor
- 72: Display
- 73: Wall part
- 74: Fluid channel
- 75: Printed circuit board
- 76: Long-range antenna
- 77: Short-range antenna
- 78: Short-range antenna
- 79: Short-range antenna
- 80: Lid
- 81: Closed bottom hole
- 83: Closed bottom hole
- 84: Short-range antenna

## Claims

1. A flow meter unit (1, 50) comprising a flow tube (2), a housing (3) and a housing compartment (4), the housing compartment comprising transmitter and receiver means including a long-range antenna for wireless long-range communication and an electronic metering circuitry (5) which circuitry is intended for determining a fluid flow rate and/or a fluid flow volume through the flow tube by means of a first sensor arrangement (6), and where the metering circuitry via a further transmitter and receiver means is in wireless communication with a second sensor arrangement (7, 20, 30, 32, 60) which is in contact with the fluid and is placed outside the housing compartment (4), and where the first sensor arrangement (6) is an ultrasonic sensor arrangement that measures transit times of ultrasonic signals reflected on reflecting surfaces (34, 35) and comprises two piezoelectric transducers (11, 12) placed on a bottom wall (40) of the housing compartment, said bottom wall forming part of the flow tube and the piezo electric transducers being connected to the electronic metering circuitry (5) and being powered by a self-contained power supply (14) **characterized in that** a short-range antenna (9, 31, 67, 78, 84) of the further transmitter and receiver means is arranged inside the housing compartment (4) and placed distanced from the long-range antenna (15, 76) and positioned at a height in-between said long-range antenna and the bottom wall (40, 64) of the compartment (4).

2. A flow meter unit according to claim 1 wherein the short-range antenna (9, 31, 67, 78, 84) of the further transmitter and receiver means is positioned in a section of the compartment (4) that houses the bottom wall (40, 64) and which section is distal to the position of the long-range antenna (15, 76).

3. A flow meter unit according to claim 1 or 2 wherein the short-range antenna (9, 31, 67, 78, 84) of the further transmitter and receiver means is placed against a wall (40, 64, 73) of the compartment, preferably adhered to the wall with glue.

4. A flow meter unit according to any of claims 1 to 3 wherein the second sensor arrangement comprises a passive electronic circuitry including a short-range sensor antenna of a transmitter and receiver means (8, 8', 8", 8‴, 8ʺʺ) and where electrical energy for activating said passive circuitry to generate a measurement of a physical parameter of the fluid and to generate a subsequent data transfer of the measured physical parameter is supplied from the short-range antenna (9, 31, 67, 78, 84) of the further transmitter and receiver means placed in the housing compartment (4).

5. A flow meter unit according to any of the preceding claims 1 to 4 wherein the second sensor arrangement is placed in a bore (21, 63) in the flow tube and where the compartment (4) of the housing is materially separated from the bore by a wall (66) of the flow tube, and where a distance (d) between the short-range sensor antenna of the transmitter and receiver means (8', 8‴) and the short-range antenna (9, 31, 67, 78, 84) placed inside the housing compartment (4) is between 0,1 centimeter and 10 centimeters, more preferred between 1 centimeter and 5 centimeters.

6. A flow meter unit according to any of the preceding claims 1 to 5 wherein the second sensor arrangement (20, 60) is placed in a bore (21, 63) in a wall (22, 66) of the flow tube, preferably with an inner part (24, 61) of the second sensor arrangement fully or partly immersed into the fluid and an outer part (8', 25, 71, 68) placed outside the flow tube, said outer part (71) containing the transmitter and receiver means (8‴) and the inner part containing a fluid channel (23, 74).

7. A flow meter unit according to any of claims 1 to 6 wherein the short-range sensor antenna of the second sensor arrangement (60) is extended in a direction towards a position where the distance from the short-range sensor antenna to the short-range antenna (67) of the further transmitter and receiver means arranged inside the housing compartment (4) enables an optimized inductive coupling between the two antennas, such as a position where the distance corresponds to a wall (64) thickness.

8. A flow meter unit according to any of claims 1 to 7 wherein said short-range antenna (9, 31, 67, 78, 84) of the further transmitter and receiver means is embodied as a coil and placed inside the housing compartment (4) with a narrow distance to the short-range antenna of the second sensor arrangement, such as a distance where a wireless signal received from the second sensor arrangement has maximum or near maximum amplitude.

9. A flow meter unit according to any of claims 1 to 8 wherein the wireless communication signal between the short-range antenna of the second sensor arrangement (7, 30, 32) and the short-range antenna (31) of the further transmitter and receiver means is partly transmitted through the fluid, such as through water.

10. A flow meter unit according to any of claims 1 to 9 where the second sensor arrangement (7) is inserted in longitudinal direction into an inlet section or outlet section (10) of the flow tube, the second sensor arrangement being essentially cylindrical and having a longitudinal throughgoing opening (19) for enabling the flow of fluid, and the transmitter and receiver means (8) of the second sensor being placed in a space (18) in-between an inner cylindrical wall (17) and an outer cylindrical wall (16) of the second sensor arrangement.

11. A flow meter unit according to any of claims 1 to 9 where the second sensor arrangement is contained in a sensor box (60) comprising a measuring stem (61) inserted fully or partly into a bore (63) of the flow tube and contacting the fluid, the sensor box further comprising a planar short-range antenna (79), the antenna being arranged in parallel with a planar antenna (67) of the further transmitter and receiver means placed inside the housing compartment (4).

12. A flow meter unit according to any of the preceding claims wherein the second sensor arrangement is placed on an outside wall (64) of the housing (3).

13. A flow meter unit according to any of the preceding claims wherein the further transmitter and receiver means in the housing is configured for near field communication with the second sensor arrangement (7, 20, 30, 32, 60) and also configured for communication with a communication device external to the flow meter unit, such as a smartphone, such as on a time sharing basis.

14. A flow meter unit according to any of claims 1 to 12 where an even further short-range antenna (77) is placed in the compartment (4) in a position enabling it to communicate via near field communication with a smartphone, such as placed in a position on a lid or in a position between 0,1 - 3 centimeters below a lid (80).

15. A flow meter unit according to claim 14 wherein the second sensor arrangement (30, 32) is placed in a reflector slay arrangement (33) in between two reflecting surfaces (34, 35) without disturbing the ultrasonic signals, said reflector arrangement being fixated and extending in longitudinal direction of the flow tube (2).

16. A flow meter unit according to claim 14 wherein the second sensor arrangement (30) is included as a full or partly cylindrical part of the reflector slay arrangement (33, 36), said cylindrical part extending longitudinally in-between the reflector surfaces (34, 35) and facing a wall (40) of the housing (3).

17. A flow meter unit according to any of the preceding claims wherein battery power for measuring the flow rate and flow volume has first priority and in case the battery power drops then less important operations are stopped or reduced in activity such as lowering the communication activity with the second sensor arrangement (7, 20, 30, 32, 60).

## Patentansprüche

1. Durchflussmesseinheit (1, 50), umfassend ein Durchflussrohr (2), ein Gehäuse (3) und einen Gehäuseraum (4), wobei der Gehäuseraum Sende- und Empfangsmittel umfasst, die eine Langstreckenantenne zur drahtlosen Langstreckenkommunikation und eine elektronische Messschaltlogik (5) einschließen, wobei die Schaltlogik dazu bestimmt ist, eine Fluiddurchflussrate und/oder ein Fluiddurchflussvolumen durch das Durchflussrohr mittels einer ersten Sensoranordnung (6) zu bestimmen, und wobei die Messschaltlogik über weitere Sende- und Empfangsmittel in drahtloser Kommunikation mit einer zweiten Sensoranordnung (7, 20, 30, 32, 60) steht, die in Kontakt mit dem Fluid steht und außerhalb des Gehäuseraumes (4) angeordnet ist, und wobei die erste Sensoranordnung (6) eine Ultraschallsensoranordnung ist, die Laufzeiten von Ultraschallsignalen misst, die an reflektierenden Oberflächen (34, 35) reflektiert werden, und zwei piezoelektrische Messwandler (11, 12) umfasst, die an einer Bodenwand (40) des Gehäuseraums angeordnet sind, wobei die Bodenwand einen Teil des Durchflussrohrs bildet und die piezoelektrischen Messwandler mit der elektronischen Messschaltlogik (5) verbunden sind und von einer autarken Energieversorgung (14) gespeist werden, **dadurch gekennzeichnet, dass** eine Kurzstreckenantenne (9, 31, 67, 78, 84) der weiteren Sende- und Empfangsmittel innerhalb des Gehäuseraums (4) angeordnet und von der Langstreckenantenne (15, 76) beabstandet und in einer Höhe zwischen der Langstreckenantenne und der Bodenwand (40, 64) des Raums (4) positioniert ist.

2. Durchflussmesseinheit nach Anspruch 1, wobei die Kurzstreckenantenne (9, 31, 67, 78, 84) der weiteren Sende- und Empfangsmittel in einem Abschnitt des Raums (4) positioniert ist, in dem sich die Bodenwand (40, 64) befindet, und dieser Abschnitt von der Position der Langstreckenantenne (15, 76) entfernt ist.

3. Durchflussmesseinheit nach Anspruch 1 oder 2, wobei die Kurzstreckenantenne (9, 31, 67, 78, 84) der weiteren Sende- und Empfangsmittel an einer Wand (40, 64, 73) des Raums angebracht ist, vorzugsweise mit Klebstoff an die Wand geklebt.

4. Durchflussmesseinheit nach einem der Ansprüche 1 bis 3, wobei die zweite Sensoranordnung eine passive elektronische Schaltlogik umfasst, die eine Kurzstreckensensorantenne von Sende- und Empfangsmitteln (8, 8', 8", 8‴, 8ʺʺ) einschließt, und wobei elektrische Energie zur Aktivierung der passiven Schaltlogik, um eine Messung eines physikalischen Parameters des Fluids zu erzeugen und eine anschließende Datenübertragung des gemessenen physikalischen Parameters zu erzeugen, von der Kurzstreckenantenne (9, 31, 67, 78, 84) der weiteren Sende- und Empfangsmittel zugeführt wird, die in dem Gehäuseraum (4) angeordnet sind.

5. Durchflussmesseinheit nach einem der vorstehenden Ansprüche 1 bis 4, wobei die zweite Sensoranordnung in einer Bohrung (21, 63) in dem Durchflussrohr angeordnet ist und wobei der Raum (4) des Gehäuses durch eine Wand (66) des Durchflussrohrs materiell von der Bohrung getrennt ist, und wobei ein Abstand (d) zwischen der Kurzstreckensensorantenne der Sende- und Empfangsmittel (8', 8‴) und der Kurzstreckenantenne (9, 31, 67, 78, 84), die im Inneren des Gehäuseraums (4) angeordnet ist, zwischen 0,1 Zentimetern und 10 Zentimetern, vorzugsweise zwischen 1 Zentimetern und 5 Zentimetern beträgt.

6. Durchflussmesseinheit nach einem der vorstehenden Ansprüche 1 bis 5, wobei die zweite Sensoranordnung (20, 60) in einer Bohrung (21, 63) in einer Wand (22, 66) des Durchflussrohrs angeordnet ist, vorzugsweise mit einem inneren Teil (24, 61) der zweiten Sensoranordnung, der ganz oder teilweise in das Fluid eingetaucht ist, und einem äußeren Teil (8', 25, 71, 68), der außerhalb des Durchflussrohrs angeordnet ist, wobei der äußere Teil (71) die Sende- und Empfangsmittel (8‴) enthält und der innere Teil einen Fluidkanal (23, 74) enthält.

7. Durchflussmesseinheit nach einem der Ansprüche 1 bis 6, wobei die Kurzstreckensensorantenne der zweiten Sensoranordnung (60) in Richtung einer Position verlängert ist, in der der Abstand zwischen der Kurzstreckensensorantenne und der Kurzstreckenantenne (67) der weiteren, im Inneren des Gehäuseraums (4) angeordneten Sende- und Empfangsmittel eine optimierte induktive Kopplung zwischen den beiden Antennen ermöglicht, wie beispielsweise eine Position, in der der Abstand einer Dicke einer Wand (64) entspricht.

8. Durchflussmesseinheit nach einem der Ansprüche 1 bis 7, wobei die Kurzstreckenantenne (9, 31, 67, 78, 84) der weiteren Sende- und Empfangsmittel als Spule ausgebildet und innerhalb des Gehäuseraums (4) mit einem geringen Abstand zu der Kurzstreckenantenne der zweiten Sensoranordnung angeordnet ist, beispielsweise einem Abstand, bei dem ein von der zweiten Sensoranordnung empfangenes drahtloses Signal eine maximale oder nahezu maximale Amplitude aufweist.

9. Durchflussmesseinheit nach einem der Ansprüche 1 bis 8, wobei das drahtlose Kommunikationssignal zwischen der Kurzstreckenantenne der zweiten Sensoranordnung (7, 30, 32) und der Kurzstreckenantenne (31) der weiteren Sende- und Empfangsmittel teilweise durch das Fluid, wie beispielsweise durch Wasser, übertragen wird.

10. Durchflussmesseinheit nach einem der Ansprüche 1 bis 9, wobei die zweite Sensoranordnung (7) in Längsrichtung in einen Einlassabschnitt oder einen Auslassabschnitt (10) des Durchflussrohrs eingesetzt ist, wobei die zweite Sensoranordnung im Wesentlichen zylindrisch ist und eine längs verlaufende Durchgangsöffnung (19) aufweist, um den Durchfluss von Fluid zu ermöglichen, und wobei die Sende- und Empfangsmittel (8) des zweiten Sensors in einem Raum (18) zwischen einer inneren zylindrischen Wand (17) und einer äußeren zylindrischen Wand (16) der zweiten Sensoranordnung angeordnet sind.

11. Durchflussmesseinheit nach einem der Ansprüche 1 bis 9, wobei die zweite Sensoranordnung in einem Sensorkasten (60) enthalten ist, der eine Messspindel (61) umfasst, die ganz oder teilweise in eine Bohrung (63) des Durchflussrohrs eingeführt ist und mit dem Fluid in Kontakt steht, wobei der Sensorkasten ferner eine ebene Kurzstreckenantenne (79) umfasst, die parallel zu einer ebenen Antenne (67) der weiteren Sende- und Empfangsmittel angeordnet ist, die sich im Inneren des Gehäuseraums (4) befinden.

12. Durchflussmesseinheit nach einem der vorstehenden Ansprüche, wobei die zweite Sensoranordnung an einer äußeren Wand (64) des Gehäuses (3) angeordnet ist.

13. Durchflussmesseinheit nach einem der vorstehenden Ansprüche, wobei die weiteren Sende- und Empfangsmittel im Gehäuse für die Nahfeldkommunikation mit der zweiten Sensoranordnung (7, 20, 30, 32, 60) und auch für die Kommunikation mit einer Kommunikationsvorrichtung außerhalb der Durchflussmesseinheit, wie beispielsweise einem Smartphone, konfiguriert sind, beispielsweise auf einer Zeitverteilungsbasis.

14. Durchflussmesseinheit gemäß einem der Ansprüche 1 bis 12, wobei eine weitere Kurzstreckenantenne (77) in dem Raum (4) in einer Position platziert ist, die es ihr ermöglicht, über Nahfeldkommunikation mit einem Smartphone zu kommunizieren, beispielsweise in einer Position auf einem Deckel oder in einer Position zwischen 0,1-3 Zentimetern unter einem Deckel (80).

15. Durchflussmesseinheit nach Anspruch 14, wobei die zweite Sensoranordnung (30, 32) in einer Reflektorstreifenanordnung (33) zwischen zwei reflektierenden Oberflächen (34, 35) angeordnet ist, ohne die Ultraschallsignale zu stören, wobei die Reflektoranordnung fixiert ist und sich in Längsrichtung des Durchflussrohrs (2) erstreckt.

16. Durchflussmesseinheit nach Anspruch 14, wobei die zweite Sensoranordnung (30) als ganzer oder teilweise zylindrischer Teil der Reflektorstreifenanordnung (33, 36) eingeschlossen ist, wobei sich der zylindrische Teil in Längsrichtung zwischen den reflektierenden Oberflächen (34, 35) erstreckt und einer Wand (40) des Gehäuses (3) gegenüberliegt.

17. Durchflussmesseinheit nach einem der vorstehenden Ansprüche, wobei die Batterieenergie für das Messen der Durchflussrate und des Durchflussvolumens erste Priorität aufweist und im Falle einer Verringerung der Batterieenergie weniger wichtige Operationen gestoppt oder in ihrer Aktivität reduziert werden, wie beispielsweise die Verringerung der Kommunikationsaktivität mit der zweiten Sensoranordnung (7, 20, 30, 32, 60).

## Revendications

1. Unité débitmètre (1, 50) comprenant un tube d'écoulement (2), un boîtier (3) et un compartiment de boîtier (4), le compartiment de boîtier comprenant un moyen émetteur et récepteur comportant une antenne longue portée pour la communication sans fil longue portée et un circuit de mesure électronique (5), lequel circuit est destiné à déterminer un débit de fluide et/ou un volume d'écoulement de fluide à travers le tube d'écoulement au moyen d'un premier agencement de capteurs (6), et où le circuit de mesure via un moyen émetteur et récepteur supplémentaire est en communication sans fil avec un second agencement de capteurs (7, 20, 30, 32, 60) qui est en contact avec le fluide et est placé à l'extérieur du compartiment de boîtier (4), et où le premier agencement de capteurs (6) est un agencement de capteurs ultrasoniques qui mesure les temps de transit de signaux ultrasonores réfléchis sur des surfaces réfléchissantes (34, 35) et comprend deux transducteurs piézoélectriques (11, 12) placés sur une paroi inférieure (40) du compartiment de boîtier, ladite paroi inférieure formant partie du tube d'écoulement et les transducteurs piézoélectriques étant reliés au circuit de mesure électronique (5) et étant alimentés par une alimentation électrique autonome (14), **caractérisée en ce qu'**une antenne courte portée (9, 31, 67, 78, 84) du moyen émetteur et récepteur supplémentaire est agencée à l'intérieur du compartiment de boîtier (4) et placée à distance de l'antenne longue portée (15, 76) et positionnée à une hauteur entre ladite antenne longue portée et la paroi inférieure (40, 64) du compartiment (4).

2. Unité débitmètre selon la revendication 1 dans laquelle l'antenne courte portée (9, 31, 67, 78, 84) du moyen émetteur et récepteur supplémentaire est positionnée dans une section du compartiment (4) qui abrite la paroi inférieure (40, 64) et laquelle section est distale par rapport à la position de l'antenne longue portée (15, 76) .

3. Unité débitmètre selon la revendication 1 ou 2 dans laquelle l'antenne courte portée (9, 31, 67, 78, 84) du moyen émetteur et récepteur supplémentaire est placée contre une paroi (40, 64, 73) du compartiment, de préférence collée à la paroi avec de la colle.

4. Unité débitmètre selon l'une quelconque des revendications 1 à 3, dans laquelle le second agencement de capteurs comprend un circuit électronique passif comportant une antenne de capteur courte portée d'un moyen émetteur et récepteur (8, 8', 8", 8‴, 8ʺʺ) et dans laquelle l'énergie électrique pour activer ledit circuit passif afin de générer une mesure d'un paramètre physique du fluide et de générer un transfert de données ultérieur du paramètre physique mesuré est fournie par l'antenne courte portée (9, 31, 67, 78, 84) du moyen émetteur et récepteur supplémentaire placé dans le compartiment de boîtier (4).

5. Unité débitmètre selon l'une quelconque des revendications précédentes 1 à 4, dans laquelle le second agencement de capteurs est placé dans un alésage (21, 63) du tube d'écoulement et où le compartiment (4) du boîtier est matériellement séparé de l'alésage par une paroi (66) du tube d'écoulement, et où une distance (d) entre l'antenne de capteur courte portée du moyen émetteur et récepteur (8', 8"') et l'antenne courte portée (9, 31, 67, 78, 84) placée à l'intérieur du compartiment de boîtier (4) est comprise entre 0,1 centimètre et 10 centimètres, de manière davantage préférée entre 1 centimètre et 5 centimètres.

6. Unité débitmètre selon l'une quelconque des revendications précédentes 1 à 5, dans laquelle le second agencement de capteurs (20, 60) est placé dans un alésage (21, 63) dans une paroi (22, 66) du tube d'écoulement, de préférence avec une partie interne (24, 61) du second agencement de capteurs entièrement ou partiellement immergée dans le fluide et une partie externe (8', 25, 71, 68) placée à l'extérieur du tube d'écoulement, ladite partie externe (71) contenant le moyen émetteur et récepteur (8‴) et la partie interne contenant un canal de fluide (23, 74).

7. Unité débitmètre selon l'une quelconque des revendications 1 à 6, dans laquelle l'antenne de capteur courte portée du second agencement de capteur (60) est étendue dans une direction vers une position où la distance entre l'antenne de capteur courte portée et l'antenne courte portée (67) du moyen émetteur et récepteur supplémentaire agencé à l'intérieur du compartiment de boîtier (4) permet un couplage inductif optimisé entre les deux antennes, par exemple une position où la distance correspond à une épaisseur d'une paroi (64).

8. Unité débitmètre selon l'une quelconque des revendications 1 à 7, dans laquelle ladite antenne courte portée (9, 31, 67, 78, 84) du moyen émetteur et récepteur supplémentaire est incorporée sous forme de bobine et placée à l'intérieur du compartiment du boîtier (4) à une distance étroite de l'antenne courte portée du second agencement de capteurs, par exemple une distance où un signal sans fil reçu du second agencement de capteurs a une amplitude maximale ou quasi maximale.

9. Unité débitmètre selon l'une quelconque des revendications 1 à 8, dans laquelle le signal de communication sans fil entre l'antenne courte portée du second agencement de capteurs (7, 30, 32) et l'antenne courte portée (31) du moyen émetteur et récepteur supplémentaire est partiellement transmis à travers le fluide, par exemple à travers de l'eau.

10. Unité débitmètre selon l'une quelconque des revendications 1 à 9, où le second agencement de capteurs (7) est inséré dans la direction longitudinale dans une section d'entrée ou section de sortie (10) du tube d'écoulement, le second agencement de capteurs étant essentiellement cylindrique et ayant une ouverture longitudinale traversante (19) permettant l'écoulement de fluide, et le moyen émetteur et récepteur (8) du second capteur étant placé dans un espace (18) entre une paroi cylindrique interne (17) et une paroi cylindrique externe (16) du second agencement de capteurs.

11. Unité débitmètre selon l'une quelconque des revendications 1 à 9, dans laquelle le second agencement de capteurs est contenu dans une boîte de capteur (60) comprenant une tige de mesure (61) insérée entièrement ou partiellement dans un alésage (63) du tube d'écoulement et en contact avec le fluide, la boîte de capteur comprenant en outre une antenne plane courte portée (79), l'antenne étant agencée en parallèle avec une antenne plane (67) du moyen émetteur et récepteur supplémentaire placé à l'intérieur du compartiment de boîtier (4).

12. Unité débitmètre selon l'une quelconque des revendications précédentes, dans laquelle le second agencement de capteurs est placé sur une paroi externe (64) du boîtier (3).

13. Unité débitmètre selon l'une des revendications précédentes, dans laquelle le moyen émetteur et récepteur supplémentaire dans le boîtier est configuré pour une communication en champ proche avec le second agencement de capteurs (7, 20, 30, 32, 60) et également configuré pour une communication avec un dispositif de communication externe à l'unité de débitmètre, par exemple un smartphone, par exemple sur une base de partage de temps.

14. Unité débitmètre selon l'une quelconque des revendications 1 à 12, où une antenne courte portée supplémentaire (77) est placée dans le compartiment (4) dans une position lui permettant de communiquer via une communication en champ proche avec un smartphone, par exemple placée dans une position sur un couvercle ou dans une position entre 0,1 et 3 centimètres sous un couvercle (80).

15. Unité débitmètre selon la revendication 14, dans laquelle le second agencement de capteurs (30, 32) est placé dans un agencement de réflecteurs (33) entre deux surfaces réfléchissantes (34, 35) sans perturber les signaux ultrasoniques, ledit agencement de réflecteurs étant fixé et s'étendant dans la direction longitudinale du tube d'écoulement (2).

16. Unité débitmètre selon la revendication 14, dans laquelle le second agencement de capteurs (30) est inclus comme une partie cylindrique entière ou partielle de l'agencement de réflecteurs (33, 36), ladite partie cylindrique s'étendant longitudinalement entre les surfaces réfléchissantes (34, 35) et faisant face à une paroi (40) du boîtier (3).

17. Unité débitmètre selon l'une quelconque des revendications précédentes, dans laquelle l'alimentation par batterie pour mesurer le débit et le volume d'écoulement est prioritaire et, en cas de baisse de l'alimentation par batterie, les opérations moins importantes sont interrompues ou réduites en activité, par exemple en diminuant l'activité de communication avec le second agencement de capteurs (7, 20, 30, 32, 60).
